# EUROPEAN PATENT APPLICATION

(11) **EP 4 823 073 A1**
(43) Date of publication of application: **14.10.2026**
(21) Application number: 25169608.4
(22) Date of filing: 10.04.2025
(51) Int. Cl.: H04L 67/141, H04L 69/164, H04L 69/326

(54) **APPLICATION LAYER PROCESSING BASED ON QUIC PROTOCOL CONTROL INFORMATION**

(71) Applicant: Deutsche Telekom AG, 53113 Bonn (DE)
(72) Inventor: COLOM IKUNO, Josep, 2100 Korneuburg (AT); AMEND, Markus, 63667 Nidda (DE)
(74) Representative: Schwöbel, Thilo K.

(57) **Abstract**

The invention relates to a method for using a user equipment with a mobile communication network and/or for transmitting application layer messages,
wherein the mobile communication network comprises at least one access network node or entity of an access network and at least one core network node or entity of a core network,
-- wherein the access network node or entity and the core network node or entity exchange the application layer messages in uplink and downlink direction over an underlying protocol being a QUIC protocol, and/or
-- wherein the access network node or entity and a further access network node or entity exchange application layer messages in uplink and downlink direction over an underlying protocol being a QUIC protocol, and/or
-- wherein the user equipment and the core network node or entity exchange - especially involving the access network node or entity - application layer messages in uplink and downlink direction over an underlying protocol being a QUIC protocol,

wherein the method comprises the following steps:
-- in a first step, regarding a specific application layer message or a specific flow of application layer messages a mapping or an association is performed to a specific QUIC protocol control information,
-- in a second step, the specific application layer message or the specific flow of application layer messages is/are processed or routed based on the mapped or associated specific QUIC protocol control information.

## Description

### BACKGROUND

The present invention relates to a method for using a user equipment with a mobile communication network and/or for transmitting application layer messages in uplink and downlink direction over an underlying protocol being a QUIC protocol.

Additionally, the present invention relates to a system or mobile communication network for using a user equipment with the mobile communication network and/or for transmitting application layer messages in uplink and downlink direction over an underlying protocol being a QUIC protocol.

Furthermore, the present invention relates to a user equipment for being used with an inventive mobile communication network and/or for transmitting application layer messages in uplink and downlink direction over an underlying protocol being a QUIC protocol.

Furthermore, the present invention relates to a program and to a computer-readable medium for using a user equipment with a mobile communication network and/or for transmitting application layer messages in uplink and downlink direction over an underlying protocol being a QUIC protocol according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G and/or further mobile communication generations of radio access technologies (referring to the different generations of radio access technologies) and typically comprise (or consist of) cells (or radio cells) of one or a plurality of the respective radio access technology/radio access technologies, such radio cells typically being served by base station entities such as gNodeBs or eNodeBs. Typically, such a mobile communication network comprises an access network (comprising the base station entities) as well as a core network that typically comprises network nodes that realize a plurality of network functions or services.

In cellular mobile networks according to different generations of radio access technologies (e.g. in all of GSM (2G), UMTS (3G), LTE (4G), 5G and 6G), an air interface typically exists between a user equipment and its serving base station entity, and this air interface typically comprises at least a control plane and a user plane. Data or traffic - especially control data or traffic - that needs to be exchanged between the user equipment and the (or its) serving base station entity is also called access stratum (AS) traffic, i.e. relating to traffic that is typically terminated at the user equipment and at the base station entity, respectively. In addition to access stratum (AS) communication, non-access stratum (NAS) communication typically refers to data or traffic - especially control data or traffic - that is exchanged between the user equipment and the core network (i.e. typically specific network functions or services of the core network), i.e. relating to traffic that is typically terminated at the user equipment on the one hand, and at the core network (or network function or service thereof) on the other hand.
Of course - due to the air interface -, also non-access stratum communication needs to be transported, or (rather transparently) forwarded, by the base station entity (to the user equipment regarding non-access stratum communication in downlink direction, i.e. if originating from the core network, or, alternatively, to the core network regarding non-access stratum communication in uplink direction, i.e. if originating from the user equipment). However, such non-access stratum communication is typically encrypted between the user equipment and the (respective network function(s) or service(s) of the) core network such that its content is - at least in general - not visible to the base station entity.

In conventionally known mobile communication networks, application layer messages (especially non-access stratum messages, NAS messages, and/or next generation application layer protocol messages, NGAP messages) are transported - at least on the N2 interface or reference point, i.e. between the radio access network (or base station entity) and the core network (node) - using (or 'on' or 'above') the so-called stream control transmission protocol (SCTP).

Evolution of interfaces such as the N2 interface to more capable and widely used protocol stacks could, of course, provide advantages; however realizing such advantages - e.g. higher flexibility, extensibility, security, routing, scalability and especially improved cloud-nativeness - by means of changing the protocol stack, such as by removing the stream control transmission protocol (SCTP), typically involves mayor changes not only with regard to the SCTP layer itself but also on other layers of the protocol stack.

### SUMMARY

An object of the present invention is to provide a technically simple, effective, cost-effective, solution for using for using a user equipment with a mobile communication network and/or for transmitting application layer messages in uplink and downlink direction over an underlying protocol being a QUIC protocol. A further object of the present invention is to provide a corresponding system or mobile communication network, a corresponding user equipment and a corresponding program and computer-readable medium.

The object of the present invention is achieved by a method for transmitting application layer messages, wherein the mobile communication network comprises at least one access network node or entity of an access network and at least one core network node or entity of a core network,
-- wherein the access network node or entity and the core network node or entity exchange the application layer messages in uplink and downlink direction over an underlying protocol being a QUIC protocol, and/or
-- wherein the access network node or entity and a further access network node or entity exchange application layer messages in uplink and downlink direction over an underlying protocol being a QUIC protocol, and/or
-- wherein the user equipment and the core network node or entity exchange - especially involving the access network node or entity - application layer messages in uplink and downlink direction over an underlying protocol being a QUIC protocol, wherein the method comprises the following steps:
-- in a first step, regarding a specific application layer message or a specific flow of application layer messages a mapping or an association is performed to a specific QUIC protocol control information,
-- in a second step, the specific application layer message or the specific flow of application layer messages is/are processed or routed based on the mapped or associated specific QUIC protocol control information.

It is thereby advantageously possible according to the present invention to be able to use a QUIC protocol, formerly an acronym for Quick UDP Internet Connections protocol, instead of the stream control transmission protocol (SCTP), and, as a result, being able to use the features of the QUIC protocol to transport application layer messages, especially features of the QUIC protocol beyond what SCTP offers.
It is especially advantageous, according to the present invention, to use the QUIC protocol in the context of using a newer (or higher) generation mobile communication network, such as 5G, or 6G or even beyond, especially for the transport of control plane signaling, focusing on the applicability to the N2 interface of mobile networks (i.e. the interface between the radio access network (or, an access network node or entity thereof) and the core network (or, a core network node or entity thereof)), especially applying the same principles applicable to the N2 interface to the N1, Xn, E1, F1 interfaces. Typically the QUIC protocol is a transport protocol that is typically used for (or, in connection with) the HTTP/3 protocol (Hypertext Transfer Protocol, especially according to RFC 9114), but the QUIC protocol can also be used as a transport protocol, independently of using the HTTP/3 protocol.
Thus according to the present invention - regardless of whether, in a mobile communication network, the QUIC protocol is used with the HTTP/3 protocol, or without it (i.e., in this case, the QUIC protocol is just used as a (or the) transport layer to replace the SCTP protocol) to transport application layer messages or flows thereof (i.e. especially control plane signaling) or whether QUIC is used as a transport layer to replace SCTP - it is advantageously possible to use the features of the QUIC protocol (especially those features beyond what SCTP offers) to transport application layer messages such that a mapping of QUIC features is realized (or such that QUIC features are applied), especially
-- involving a mapping between application layer messages (or flows thereof) and QUIC protocol control information, especially QUIC connection ID (or QUIC connection identifier information) and QUIC stream ID (or QUIC stream identifier information), and/or
-- including 3GPP identifiers in QUIC identifiers, i.e. identifier information of an access network node or entity, a core network node or entity, and/or a (or the considered) user equipment (3GPP identifiers) in QUIC protocol control information, and/or
-- mapping 3GPP identifiers to QUIC identifiers, i.e. identifier information of an access network node or entity, a core network node or entity, and/or a (or the considered) user equipment (3GPP identifiers) to QUIC protocol control information, and/or
-- using different stream types (bidirectional/unidirectional) for different types of application layer messages (or flows thereof), e.g. NGAP Class 1 / Class 2 procedures, and/or
-- using reliable communication, especially based on a QUIC stream, or unreliable communication, especially based on DATAGRAM QUIC frames, for different types of application layer messages (or flows thereof), e.g. specific procedures,
-- combining the use of the QUIC protocol with the use of the HTTP/3 protocol for transporting application layer messages or flows thereof.

It is proposed, according to the present invention, to use both HTTP/3 and the QUIC protocol (i.e. it is proposed to not just replacing SCTP with QUIC, even though this might lead to a slightly increased complexity of HTTP overhead for radio access network applications and/or to have a "full SBI" allowing discovery/selection aspects).
Thus, it is proposed, according to the present invention, to use HTTP/3 and the QUIC protocol (over just replacing-SCTP-with-QUIC). This is because:
-- this allows to enable application programming interfaces (APIs) to be defined at N2 level which enables to modularly define new functionality, e.g. integrated sensing and communication (ISC),
-- this reduces the number of protocol stacks as it is able to be used by means of tooling around SBA/APIs for proxies, firewalls, service ingress endpoints (e.g. in k8s), application programming interface-based observability, tracing and security TLS ,
-- it is possible to reuse the security & authorization framework,
-- HTTP & application programming interfaces (APIs) is more used for remote operations than the use of QUIC without HTTP, .

Furthermore, it is advantageously possible, according to the present invention, to replace the SCTP protocol with a protocol stack using QUIC (either QUIC by itself or HTTP/3, which is built on top of QUIC, i.e. requires the use of the QUIC protocol) in a manner such that the specific form or variant (or mode) of the QUIC protocol used provides the same level of functionality via the QUIC protocol that is possible by means of using the SCTP protocol in conventionally known mobile communication networks
Hence, it is advantageously possible according to the present invention to provide a comparatively simple and clear mapping between parameters/characteristics of a given application layer message (especially a control plane application layer message) - and/or a flow of such messages - to specific characteristics of the specific form or variant (or mode) of the QUIC protocol used, especially such that:
-- these application layer messages can be signaled to relevant network elements;
-- these application layer messages can be applied to the control plane protocol stack
   -- in the case of using HTTP-based control plane, or
   -- in the case that HTTP is not being used;
-- the related QUIC protocol information (QUIC protocol control information, especially a QUIC connection identifier information or a QUIC stream identifier information) can be effectively applied while the control plane is in transit to its end destination, as well as by its intended recipient.
Especially according to the present invention, by means of an appropriate application of QUIC characteristics to, e.g., a control plane such as the 6G control plane, it is advantageously possible to provide functionality that is not only on par but also superior to that conventionally provided by SCTP.

By means of proposing to use the QUIC protocol, the present invention especially proposes enhancements that can be combined with the service-based architecture (SBA) protocol stack to better support the transport of application layer messages, especially control plane messages, e.g. NAS messages and/or NGAP messages.

NAS messages (i.e. non-access stratum messages) are control plane messages, i.e. providing control plane (CP) signaling between the user equipment and the core network (being primarily merely forwarded by the access network node or entity, i.e. the serving base station entity) and are based on the NAS (non-access stratum) protocol. The access and mobility management function (AMF) terminates NAS security for all NAS messages of a user equipment and processes mobility management (MM); however, for other functions, the access and mobility management function (AMF) forwards NAS payloads over service-based interface (SBI) to other network functions or services (NFs), such as: SMF for Session Management (SM), SMSF for SMS, PCF for policy, and GMLC for location (services).
5G-NAS is transported between the UE and the CN on top of NGAP (i.e. NGAP payloads can contain NAS containers).

Regarding NGAP messages, on the NGAP layer NGAP elementary procedures are specified. Each NGAP message indicates to what elementary procedure it is associated; equally, each procedure has a specified ASN.1 definition of the expected (e.g. mandatory, optional) parameters and their format. An elementary procedure is a unit of interaction between the NG-RAN node (i.e. the access network node or entity) and the access and mobility management function (AMF). These elementary procedures are defined separately and are intended to be used to build up complete sequences in a flexible manner. If the independence between some elementary procedures is restricted, it is described under the relevant elementary procedure description. Unless otherwise stated by the restrictions, the elementary procedures may be invoked independently of each other as standalone procedures, which can be active in parallel. The usage of several NGAP elementary procedures together or together with elementary procedures from other interfaces is specified in stage 2 specifications (e.g., TS 38.401, TS 38.410 and TS 38.300). An elementary procedure consists of an initiating message and possibly a response message, wherein two kinds of elementary procedures are used: class 1 elementary procedures (being elementary procedures with response (success and/or failure)), and class 2 elementary procedures (being elementary procedures without response).
For class 1 elementary procedures, the types of responses can be as follows: "successful" (meaning that a signaling message explicitly indicates that the elementary procedure successfully completed with the receipt of the response), "unsuccessful" (meaning that a signaling message explicitly indicates that the elementary procedure failed), "on time supervision expiry" (i.e., absence of expected response), and "successful and unsuccessful" (meaning that one signaling message reports both successful and unsuccessful outcome for the different included requests. The response message used is the one defined for successful outcome).
Class 2 elementary procedures are considered always successful (cf. TS 38.413 regarding both classes of procedures).

According to the present invention, application layer messages are transmitted between different network nodes of the considered mobile communication network (which typically comprises at least one access network node or entity of an access network and at least one core network node or entity of a core network). According to the present invention, regarding the transmission (and the reception) of application layer messages, i.e. their exchange, an underlying protocol is used being a QUIC protocol (Quick UDP Internet Connections protocol), and the application layer message exchange might happen between (or among):
-- the access network node or entity and the core network node or entity (and in uplink and/or in downlink direction), and/or
-- the access network node or entity and a further access network node or entity (and in uplink and/or in downlink direction), and/or
-- the user equipment and the core network node or entity (and likewise in uplink and/or in downlink direction).
According to the present invention, the message exchange (i.e. the transmission by the sending node or entity and the reception by the receiving node or entity, respectively) of a specific (considered) application layer message (or of a specific flow of application layer messages) over the QUIC protocol involves,
-- in a first step, a mapping or an association of that specific (considered) application layer message (or of that specific flow of application layer messages) to a specific QUIC protocol control information, and,
-- in a second step, the specific application layer message (or the specific flow of application layer messages) being processed or routed based on the mapped or associated specific QUIC protocol control information.
Thus, according to the present invention, it is advantageously possible to associate the 3GPP message flows (especially control plane message flows) to QUIC protocol control information, i.e. typically QUIC connection and/or QUIC stream identifiers. Hence, by means of this association, application layer messages or application layer message flows (typically control plane message flows) are able to be associated (or mapped) to a QUIC connection and/or a QUIC stream.

According to the present invention, the QUIC protocol is (or QUIC connections are) used to transport application layer messages.
The QUIC protocol is a protocol that provides applications with flow-controlled streams for structured communication, low-latency connection establishment, and network path migration. QUIC includes security measures that ensure confidentiality, integrity, and availability in a range of deployment circumstances.
QUIC is a secure general-purpose transport protocol.
QUIC is a connection-oriented protocol that creates a stateful interaction between a client and server.
The QUIC handshake combines negotiation of cryptographic and transport parameters. QUIC integrates the TLS handshake, although using a customized framing for protecting packets. The handshake is structured to permit the exchange of application data as soon as possible. This includes an option for clients to send data immediately (0-RTT), which requires some form of prior communication or configuration to enable.
Endpoints communicate in QUIC by exchanging QUIC packets. Most packets contain frames, which carry control information and application data between endpoints. QUIC authenticates the entirety of each packet and encrypts as much of each packet as is practical. QUIC packets are carried in UDP datagrams to better facilitate deployment in existing systems and networks.
Application protocols exchange information over a QUIC connection via streams, which are ordered sequences of bytes. Two types of streams can be created: bidirectional streams, which allow both endpoints to send data; and unidirectional streams, which allow a single endpoint to send data. A credit-based scheme is used to limit stream creation and to bound the amount of data that can be sent.
QUIC provides the necessary feedback to implement reliable delivery and flow control.
QUIC depends on flow control to avoid network congestion.flow control
QUIC connections are not strictly bound to a single network path. Connection migration uses connection identifiers to allow connections to transfer to a new network path. Only clients are able to migrate in this version of QUIC. This design also allows connections to continue after changes in network topology or address mappings, such as might be caused by NAT rebinding.
Once established, multiple options are provided for connection termination. Applications can manage a graceful shutdown, endpoints can negotiate a timeout period, errors can cause immediate connection teardown, and a stateless mechanism provides for termination of connections after one endpoint has lost state.
QUIC provides several features, the most relevant of which in the context of the present invention are the following:
-- DATAGRAM (unreliable transport) (see RFC 9221),
-- STREAM (reliable transport)
-- Encryption with TLS
-- Multi-stream transport (de-coupled-flow control)
-- Migration (failover)
-- Multipath (aggregation).
Additionally, it is considered, according to the present invention, that the following features that make use of QUIC (and potentially combine it with other protocols):
-- QUIC-Aware Proxying Using HTTP (see RFC draft:
   https://datatracker.ietf.org/doc/draft-ietf-masque-quic-proxy/)
-- QUIC-LB: Generating Routable QUIC Connection IDs (see RFC draft: https://datatracker.ietf.org/doc/html/draft-ietf-quic-load-balancers)
QUIC Streams: Streams in QUIC provide a lightweight, ordered byte-stream abstraction (See https://http3-explained.haxx.se/en/quic/quic-streams).
There are two basic types of stream in QUIC:
-- Unidirectional streams carry data in one direction: from the initiator of the stream to its peer.
-- Bidirectional streams allow for data to be sent in both directions.
Either type of stream can be created by either endpoint, can concurrently send data interleaved with other streams, and can be canceled.
To send data over a QUIC connection, one or more streams are used.
QUIC Stream Identifiers:
Streams are identified within a connection by a numeric value, referred to as the stream ID. A stream ID is a variable-length integer that is unique for all streams on a connection. A QUIC endpoint MUST NOT reuse a stream ID within a connection.
The least significant two bits of the Stream ID are used to identify the type of stream (unidirectional or bidirectional) and the initiator of the stream.
The least significant bit (0x1) of the Stream ID identifies the initiator of the stream. Clients initiate even-numbered streams (those with the least significant bit set to 0); servers initiate odd-numbered streams (with the bit set to 1).
The second least significant bit (0x2) of the Stream ID differentiates between unidirectional streams and bidirectional streams. Unidirectional streams always have this bit set to 1 and bidirectional streams have this bit set to 0.

### Stream Concurrency:

QUIC allows for an arbitrary number of streams to operate concurrently. An endpoint limits the number of concurrently active incoming streams by limiting the maximum stream ID.
The maximum stream ID is specific to each endpoint and applies only to the peer that receives the setting.

### Datagram unreliable transport:

QUIC also defines an extension to the QUIC transport protocol to add support for sending and receiving unreliable datagrams over a QUIC connection. Extending QUIC to support transmitting unreliable application data provides another option for secure datagrams with the added benefit of sharing the cryptographic and authentication context used for reliable streams. RFC9221 defines two new DATAGRAM QUIC frame types that carry application data without requiring retransmissions. Additionally, a combination of DATAGRAM QUIC frames and HTTP is described in RFC9297, such that in HTTP/3, HTTP Datagrams can be sent unreliably using the QUIC DATAGRAM extension.

According to the present invention, it is advantageously possible and preferred that the specific application layer message or the specific flow of application layer messages correspond(s) to:
-- messages exchanged between the user equipment and the core network node or entity,
-- messages exchanged between the access network node or entity and the core network node or entity, or
-- messages exchanged between the access network node or entity and a further access network node or entity,

especially corresponding to user equipment-associated signaling and/or non-user equipment-associated signaling,
especially to next generation application layer protocol message(s), NGAP message(s), E1AP message(s), F1AP message(s), XnAP message(s) and/or to non-access stratum message(s), NAS message(s).

According to further embodiments of the present invention, it is possible and preferred that the specific QUIC protocol control information comprises identifier information of
-- the access network node or entity and/or
-- the core network node or entity and/or
-- the user equipment and/or
-- the further access network node or entity
involved in the specific application layer message or the specific flow of application layer messages.

It is thereby advantageously possible to leverage the features and the flexibility of the QUIC protocol for performing routing decisions and/or load-balancing decisions based on identifier information of the involved network nodes or entities themselves.

In a further embodiment of the present invention, it is possible and preferred that - regarding an interface logical channel, especially an N2, Xn, E1, F1 interface logical channel - a QUIC connection between the access network node or entity and the core network node or entity or between the access network node or entity and the further the access network node or entity comprises a multitude of application layer message flows, especially comprising at least one non-user equipment-associated application layer message flow and/or at least one user equipment-associated application layer message flow,
wherein especially a specific QUIC connection comprises
-- a first QUIC stream comprising non-user equipment-associated application layer message(s) and a second QUIC stream comprising user equipment-associated application layer message(s), and/or
-- a third QUIC stream comprising user equipment-associated application layer message(s) regarding a different user equipment.

It is thereby advantageously possible to flexibly mix different QUIC streams in one QUIC connection in a manner such that the different QUIC streams have different properties and/or endpoints.

Still furthermore, it is also possible and preferred, according to the present invention that - regarding an interface logical channel, especially an N1, N2, Xn, E1, or F1 interface logical channel - a QUIC connection between the access network node or entity and the core network node or entity, or between the access network node or entity and the further the access network node or entity, or between the user equipment and the core network node or entity, comprises a plurality of different application layer message flows having the same endpoints but different types of signaling,
especially a plurality of different application layer message flows being user equipment-associated application layer message flows, especially related to an N1, N2, Xn, E1, or F1 interface, that are related to the same user equipment but having different types of signaling, especially related to being either bidirectional or unidirectional,
   and/or
especially a plurality of different application layer message flows being user equipment-associated application layer message flows, especially related to an N2, Xn, E1, or F1 interface, that are related to the same user equipment but having different types of signaling, especially related to using reliable, especially based on a QUIC stream, or unreliable, especially based on DATAGRAM QUIC frames, transport,
   and/or
especially a plurality of different application layer message flows being non-user equipment-associated application layer message flows, especially related to an N2, Xn, E1, or F1 interface, that are related to the same endpoints but having different types of signaling, especially related to being either bidirectional or unidirectional,
   and/or
especially a plurality of different application layer message flows being non-user equipment-associated application layer message flows, especially related to an N2, Xn, E1, or F1 interface, that are related to the same endpoints but having different types of signaling, especially related to using reliable, especially based on a QUIC stream, or unreliable, especially based on DATAGRAM QUIC frames, transport.

Again, it is thereby advantageously possible to flexibly mix different QUIC streams in one QUIC connection in a manner such that the different QUIC streams have different properties and/or endpoints.

Likewise, it is possible and preferred, according to the present invention that - in order to perform a NG setup procedure involving an NG setup request and an NG setup response between the access network node or entity and the core network node or entity -,
-- a QUIC connection, relating to a first QUIC protocol control information, especially as a QUIC connection identifier information (X), is opened and associated, or mapped, to one or a plurality of specific application layer messages or a specific flow thereof, and
-- a QUIC stream, relating to a second QUIC protocol control information, especially as a QUIC stream identifier information (Y), is opened and associated, or mapped, to one or a plurality of specific application layer messages or a specific flow thereof,
wherein the NG setup request and the NG setup response are processed or routed based on the first and second QUIC protocol control information (X, Y).

Thereby, it is advantageously possible, to efficiently perform the NG setup procedure involving an NG setup request and an NG setup response.

Still furthermore, it is also possible and preferred, according to the present invention that - in order to perform a user equipment registration procedure involving an NAS initial registration request between the user equipment and the core network node or entity -, a QUIC stream, relating to a third QUIC protocol control information, especially as a QUIC connection identifier information (Z), is opened and associated, or mapped, to one or a plurality of specific application layer messages or a specific flow thereof, wherein the NAS initial registration request is processed or routed based on the third QUIC protocol control information (Z) or based on the first and third QUIC protocol control information (X, Z).

Thereby, it is advantageously possible, to efficiently perform the user equipment registration procedure involving a NAS initial registration request.

Additionally, it is also possible and preferred, according to the present invention that the specific QUIC protocol control information is used for load balancing purposes - especially at the at least one core network node or entity, especially an access and mobility management function - by a load balancing entity or functionality, wherein, regarding processing the specific application layer message or the specific flow of application layer messages, the load balancing entity or functionality selects, based on the specific QUIC protocol control information, one of a plurality of (worker) instances, especially of the at least one core network node or entity.

Thereby, it is advantageously possible, according to the present invention, to efficiently perform load balancing.

Still furthermore, it is also possible and preferred, according to the present invention that stream-limit rejection is used for load balancing purposes among a plurality of instances of a type of network node or entity - especially among a plurality of instances of the core network node or entity, especially an access and mobility management function -, wherein, regarding processing of the specific application layer message or the specific flow of application layer messages, a first instance of the type of network node or entity rejects to process the specific application layer message or the specific flow of application layer messages due to its stream-limit, and, subsequently, a second instance of the type of network node or entity accepts to process the specific application layer message or the specific flow of application layer messages.

Additionally, it is also possible and preferred, according to the present invention that the application layer messages or the flow thereof is/are transmitted and/or received by using a path migration and/or multipath functionality of the QUIC protocol, wherein especially the stream association comprises stream affinity information.

Still furthermore, it is also possible and preferred, according to the present invention that the specific QUIC protocol control information, especially the connection identifier information and/or the stream identifier information, comprises or is associated to the identifier information of at least one of the access network node or entity, the core network node or entity and the user equipment,
especially by means of using at least one of the following:
   -- an access and mobility management function identifier information,
   -- a GUAMI identifier information,
   -- a global cell identifier information,
   -- a gNB identifier information,
   -- a network identifier information, especially the PLMN identifier information,
   -- a radio access network user equipment next generation application layer protocol identifier information, RAN UE NGAP identifier information,
   -- an access and mobility management function user equipment next generation
   application layer protocol identifier information, AMF UE NGAP identifier information,
   -- an access network node or entity identifier information,
   -- a core network node or entity identifier information,
   -- a user equipment identifier information,
wherein especially the specific QUIC protocol control information comprises the identifier information by means of a cryptographic combination of a plurality of the identifier information of at least one of the access network node or entity, the core network node or entity and the user equipment.

Furthermore, the present invention relates to a system or to a mobile communication network for transmitting application layer messages,
wherein the mobile communication network comprises at least one access network node or entity of an access network and at least one core network node or entity of a core network,
-- wherein the access network node or entity and the core network node or entity exchange the application layer messages in uplink and downlink direction over an underlying protocol being a QUIC protocol, and/or
-- wherein the access network node or entity and a further access network node or entity exchange application layer messages in uplink and downlink direction over an underlying protocol being a QUIC protocol, and/or
-- wherein the user equipment and the core network node or entity exchange - especially involving the access network node or entity - application layer messages in uplink and downlink direction over an underlying protocol being a QUIC protocol, wherein the system of mobile communication network is configured such that:
-- regarding a specific application layer message or a specific flow of application layer messages a mapping or an association is performed to a specific QUIC protocol control information,
-- the specific application layer message or the specific flow of application layer messages is/are processed or routed based on the mapped or associated specific QUIC protocol control information.

Still furthermore, the present invention relates to a user equipment for using the user equipment with the mobile communication network and/or for transmitting application layer messages,
wherein the user equipment and a core network node or entity of the mobile communication network exchange - especially involving an access network node or entity of the mobile communication network - application layer messages in uplink and downlink direction over an underlying protocol being a QUIC protocol,
wherein the user equipment is configured such that:
   -- regarding a specific application layer message or a specific flow of application layer messages a mapping or an association is performed to a specific QUIC protocol control information,
   -- the specific application layer message or the specific flow of application layer messages is/are processed or routed based on the mapped or associated specific QUIC protocol control information.

Additionally, the present invention relates to a program comprising a computer readable program code, which, when executed on a computer and/or on a core network node or entity and/or on an access network node or entity, especially a base station entity, or in part on a core network node or entity and/or in part on an access network node or entity, especially a base station entity, causes the computer and/or the core network node or entity and/or the access network node or entity, especially the base station entity, to perform the inventive method.

Still additionally, the present invention relates to a Computer-readable medium comprising instructions which when executed on a computer and/or on a core network node or entity and/or on an access network node or entity, especially a base station entity, or in part on a core network node or entity and/or in part on an access network node or entity, especially a base station entity, causes the computer and/or the core network node or entity and/or the access network node or entity, especially the base station entity, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

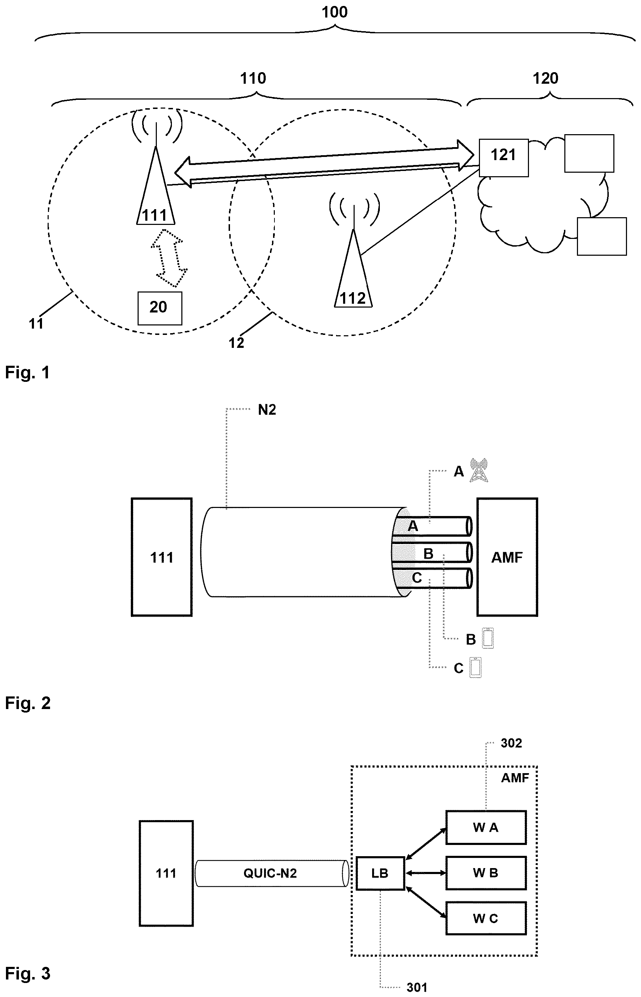

Figure 1 schematically illustrates the situation of a user equipment in a mobile communication network comprising a core network as well as a radio access network that has (at least) two base station entities (or access network nodes or entities), one of which is serving the user equipment, thus involving data being transmitted, both in uplink direction and in downlink direction, between the user equipment and the (serving) base station entity (or access network node or entity), as well as between the (serving) base station entity (or access network node or entity) and the core network, involving application layer messages in uplink and downlink direction over an underlying protocol being a QUIC protocol.
Figure 2 schematically and exemplarily illustrates the N2 interface (or reference point) between a base station entity (or access network node or entity) and a core network node or entity (especially an instance of an access and mobility management function), between which an N2 QUIC connection is established, this QUIC connection comprising a plurality of QUIC streams having different properties and/or parameters in the sense of, e.g., different endpoints etc.
Figure 3 schematically and exemplarily also illustrates an N2 QUIC connection between a base station entity (or access network node or entity) and a core network node or entity (especially an instance of an access and mobility management function) but furthermore exemplarily shows how load balancing, especially as part of the access and mobility management function or core network node or entity is able to be realized according to the present invention.

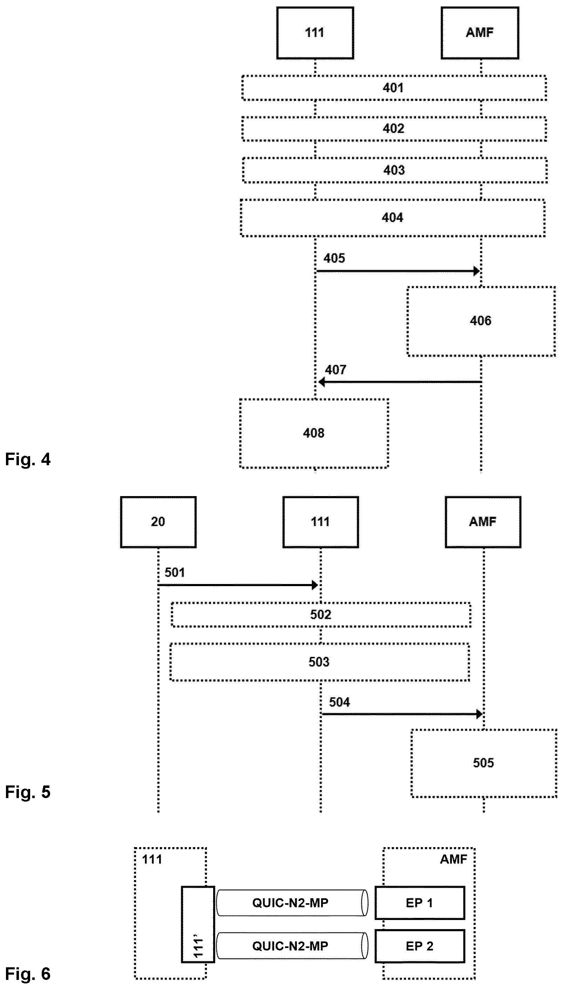

Figures 4 and 5 schematically and exemplarily illustrate the communication between the access network node or entity (or base station entity) and the core network (or a network function or service thereof) for the situations of an NG setup over a QUIC stream (Figure 4) and a NAS initial registration request (Figure 5).
Figure 6 schematically and exemplarily illustrates an N2 QUIC connection between a base station entity (or access network node or entity) and a core network node or entity (especially an instance of an access and mobility management function) illustrating multipath functionality using the QUIC protocol.

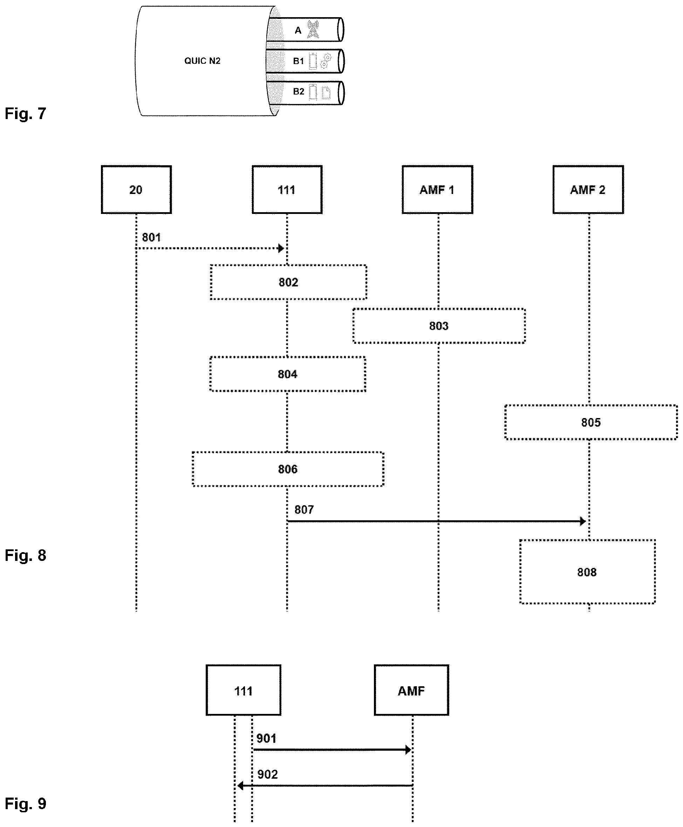

Figure 7 schematically and exemplarily illustrates an N2 QUIC connection (typically and exemplarily realized between a base station entity (or access network node or entity) and a core network node or entity (especially an instance of an access and mobility management function)) illustrating the association of signaling traffic to multiple streams with different types.
Figure 8 schematically and exemplarily illustrates the communication between the user equipment, the access network node or entity (or base station entity) and two core network nodes or entities (especially instances of an access and mobility management function) illustrating QUIC-level load balancing.
Figure 9 schematically and exemplarily illustrates QUIC endpoint signaling for application layer message communication, especially control plane communication.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110, and a core network 120 is schematically shown. The telecommunications network 100 or also mobile communication network 100 is typically realized as a cellular network or cellular mobile communication network 100. The mobile communication network 100, especially the core network 120, typically comprises a number of network functions or services that are not specifically indicated by means of a reference sign - only one network function or service is indicated by means of reference sign 121 which is, hereinafter, also called core network node or entity 121. The access network 110 or radio access network 110 typically comprises a plurality of radio cells 11, 12, i.e. geographical areas served, respectively, by base station entities. In the exemplary situation or scenario shown in Figure 1, a first base station entity 111 generates or is associated with or spans the first (terrestrial) radio cell 11, and a second base station entity 112 generates or is associated with or spans the second (terrestrial) radio cell 12 (the first and second (terrestrial) radio cells 11, 12 being represented, in Figure 1, by means of dashed circles around the first and second base station entity 111, 112, respectively). The first and second base station entity 111, 112 typically realize gNB functionality or next-generation gNB functionality. In the context of the present invention, such base station entities 111, 112 are also called, synonymously to the term base station entities, access network node(s) or entity/entities. The mobile communication network 100 is typically connected to a user equipment 20 (or, rather, the user equipment 20 is connected to the telecommunications network 100). In the exemplary situation represented in Figure 1, the user equipment 20 is schematically shown as being served by the first base station entity 111 - typically involving uplink data, being transmitted in uplink direction, and downlink data, being transmitted in downlink direction, both being represented, in Figure 1, by means of a double arrow (represented by means of a dotted line) between the base station entity/access network node or entity 111 and the user equipment 20. Such uplink and downlink data, obviously, also need to be transmitted between the serving base station entity/access network node or entity 111 and the core network (especially exemplarily shown network function or service (or core network node or entity) 121 thereof); in Figure 1, this is schematically represented by means of a double arrow between the network function or service (core network node or entity) 121 and the base station entity/access network node or entity 111.

According to the present invention, the user equipment 20 is part of, or connected to, the mobile communication network 100, and, thus, transmits or exchanges data (or traffic) with the mobile communication network 100. This, of course, includes data or traffic exchanged on the air interface between the user equipment 20 and the base station entity/access network node or entity 111 (this is typically called the Uu interface or reference point), but it also includes data or traffic - especially control plane data or traffic - exchanged (i.e. transmitted in uplink as well as in downlink direction) between the base station entity/access network node or entity 111 (that is serving the user equipment 20) and the core network 120 (especially one specific network function or service 121 of the plurality of different network functions or services that the core network 120 typically has or comprises); this is typically called the N2 interface or reference point (regarding communication between the radio access network and the core network) and also relates to the N1 interface or reference point (regarding communication between the base station entity/access network node or entity 111 and the core network/network function or service 121 thereof - especially involving non-access stratum messages, NAS messages).

In conventionally known mobile communication networks 100 as well as according to the present invention, a different protocol stack is typically realized, or used, for realizing the Uu interface or reference point on the one hand, and the N2/N1 interface or reference point on the other hand. Typically the N2/N1 reference stack involves a non-access stratum layer for transporting NAS messages as well as a next generation application layer protocol (NGAP) layer for transporting NGAP messages. Thus, according to the present invention, next generation application layer protocol messages, NGAP messages, and/or non-access stratum messages, NAS messages, are transmitted - at least between the base station entity/access network node or entity 111 and the core network node or entity 121 - using an underlying protocol below the next generation application layer protocol (NGAP)-Layer (but wherein, typically, the NAS messages are not terminated at the access network node or entity 111, but, rather, only forwarded). Thus, both these application layer messages (i.e. typically NGAP messages and/or NAS messages) are exchanged in uplink and downlink direction (and between the access network node or entity 111 and the core network node or entity 121) over the underlying protocol below the next generation application layer protocol (NGAP)-Layer.

In conventionally known mobile communication networks, this underlying protocol is typically the stream control transmission protocol (SCTP).

According to the present invention, the mobile communication network (i.e. the access network node or entity 111 and the core network node or entity 121) is configured such that this underlying protocol is a (or the) QUIC protocol. This advantageously provides the possibility to use the features of the QUIC protocol to transport control plane application layer messages (especially features of the QUIC protocol beyond what SCTP offers).

In Figure 2, the N2 interface (or reference point) between the base station entity (or access network node or entity) 111 and a (or the) core network node or entity 121 - which is especially an instance of an access and mobility management function and, hence, hereinafter also designated by means of reference sign AMF - is schematically and exemplarily illustrated as a N2 QUIC connection being established. Thus, Figure 2 shows an example where QUIC is used for the transport of application layer messages - typically related to control plane or service plane traffic - between the base station entity/access network node or entity (or gNb) 111 and the core network node or entity AMF, that is, N2 interface (a term especially used in the realm of core network specifications) is also called "NG-C interface". The same -C/-U terms are also applied to the E1, F1, Xn interfaces and hence the same can be applied to exemplarily illustrate a E1 QUIC, F1 QUIC and/or Xn QUIC connection.

Reference is made to reference sign N2 in Figure 2 that refers to the N2 interface (NG-C interface) that realizes a logical channel between the access network node or entity 111 (or base station entity/gNB) and the access and mobility management function AMF, and which typically includes both user equipment-associated signaling and non-user equipment-associated signaling. In the example schematically shown in Figure 2, this N2 QUIC connection N2 comprises a plurality of QUIC streams, namely
-- a QUIC stream "A" (cf. reference sign A in Figure 2) transporting non-user equipment-associated signaling (towards the base station entity or access network node or entity 111);
-- a QUIC stream "B" (cf. reference sign B in Figure 2) transporting user equipment-associated signaling (towards or from a first user equipment (that might also be called user "equipment B") which (first) "user equipment B" might be served by base station entity/access network node or entity 111, thus respective (signaling) data need to be exchanged between access and mobility management function AMF and base station entity 111, however the endpoint of that QUIC stream B is "user equipment B");
-- a QUIC stream "C" (cf. reference sign C in Figure 2) transporting user equipment-associated signaling (towards or from a second user equipment (that might also be called user "equipment C") which (second) "user equipment C" might also be served by base station entity/access network node or entity 111, thus respective (signaling) data need to be exchanged between access and mobility management function AMF and base station entity 111, however the endpoint of that QUIC stream C is "user equipment C").
Hence, according to the present invention, an association between the N2 interface and the QUIC connection is proposed for user equipment-associated signaling and/or non-user equipment-associated signaling - i.e. regarding a specific application layer message (or a specific flow of application layer messages) on the N2 interface, a mapping or an association is performed to a specific QUIC protocol control information (i.e. a control information as part of the QUIC protocol), and this specific application layer message (or flow thereof) is processed or routed based on the mapped or associated specific QUIC protocol control information.
For example, this allows implementations of access and mobility management functions AMF (or other core network nodes or entities 121 using the QUIC protocol) to efficiently perform work (i.e. provide (transport protocol) services such as load balancing or the like) based on (or at) the QUIC level (i.e. based on the specific QUIC protocol control information) instead of having to parse and/or process application level information (e.g. NGAP payloads) in order to provide the respective (transport protocol) service such as load-balancing of the traffic.

This is schematically shown in Figure 3, which schematically and exemplarily also illustrates an N2 QUIC connection (cf. reference sign "N2 QUIC" in Figure 3) between a base station entity (or access network node or entity) 111 and a core network node or entity (especially an instance of an access and mobility management function) AMF. Figure 3 furthermore exemplarily shows how load balancing, especially as part of the access and mobility management function or core network node or entity AMF is able to be realized according to the present invention: The access and mobility management function or core network node or entity AMF comprises a load balancer or load balancing entity or functionality (cf. reference sign LB) that also realizes security termination 301 of messages arriving via the QUIC N2 interface: QUIC encrypts all data at the transport layer, i.e. an intermediary (like a load balancer) cannot inspect or separate individual streams for distribution without breaking encryption. Furthermore, the access and mobility management function or core network node or entity AMF comprises a plurality of worker entities or functionalities (cf. reference signs W A, W B, W C) that realize stream processing 302 of the messages that arrive via the QUIC N2 interface and that have been distributed (for load balancing purposes) among the worker entities or functionalities W A, W B, W C.
Hence, since the QUIC streams have independent flow control, any issues with a given stream advantageously do not impact the performance of the N2 interface (or QUIC N2 interface) as a whole. The load-balancer LB (or load balancing entity or functionality of the AMF) terminates security and then distribute loads on a per-stream basis without the need to go deeper into the messages, e.g. without having to inspect the NGAP message.

Figures 4 and 5 schematically and exemplarily illustrate the communication between the access network node or entity (or base station entity) 111 and the core network (or a network function or service thereof) AMF for the situations of an NG setup over a QUIC stream (Figure 4) and a NAS initial registration request (Figure 5). Regarding the following description of each of these Figures, the indication "in the n^{th} processing step, 'abc' or 'abc-message' is transmitted by x-entity/received by y-entity" means that the corresponding message (of type "abc") is transmitted by the respective sending (or transmitting) entity (from which the corresponding arrow is originating or where the respective box shown in the Figures is positioned) to the respective receiving entity. Furthermore, NAS (layer) messages are indicated as arrows; these NAS (layer) messages are actually transported by the QUIC messages represented by means of the boxes:

Figure 4 exemplarily represents a communication diagram between the access network node or entity (or base station entity) 111 and the core network (or a network function or service thereof) AMF; especially, Figure 4 is an example of a non-user equipment-associated signaling communication.
In a first processing step 401, a QUIC connection X is opened between the access network node or entity (or base station entity) 111 and the core network (or a network function or service thereof) AMF.
In a second processing step 402, the QUIC connection X is associated to the signaling between the access network node or entity (or base station entity) 111 and the core network (or a network function or service thereof) AMF.
In a third processing step 403, a QUIC stream Y (as part of QUIC connection X) is opened, the QUIC stream Y having the associated (appropriate) characteristics.
In a fourth processing step 404, the QUIC stream Y is associated (exemplarily) to non-user equipment-associated signaling communication between the access network node or entity (or base station entity) 111 and the core network (or a network function or service thereof) AMF.
In a fifth processing step 405, an NG setup request (message) is transmitted - between the access network node or entity (or base station entity) 111 and the core network (or a network function or service thereof) AMF - over QUIC, indicating (or referring to) QUIC connection X and QUIC stream Y.
In a sixth processing step 406, a QUIC message associated to non-user equipment-associated signaling communication between the access network node or entity (or base station entity) 111 and the core network (or a network function or service thereof) AMF is transmitted.
In a seventh processing step 407, an NG setup response (message) is transmitted - between the access network node or entity (or base station entity) 111 and the core network (or a network function or service thereof) AMF - over QUIC, indicating (or referring to) QUIC connection X and QUIC stream Y.
In an eighth processing step 408, a QUIC message is transmitted - between the access network node or entity (or base station entity) 111 and the core network (or a network function or service thereof) AMF - the QUIC message being associated to non-user equipment-associated signaling.

Hence, Figure 4 shows identifier signaling and association regarding a non-user equipment-associated signaling communication.
The purpose of the NG setup procedure is to exchange application level data needed for the NG-RAN node (access network node or entity (or base station entity) 111) and the AMF (or core network node or entity 121) to correctly interoperate on the NG-C interface. This procedure shall be the first NGAP procedure triggered after the TNL association (TNL referring to transport network layer, and TNL association (TNLA) can be used for UE-associated signaling, non-UE-associated signaling or both, e.g. in case there is a single TNLA towards an AMF) has become operational. The procedure uses non-user equipment-associated signalling (especially according to TS 38.413, clause 8.7.1.1). In order to allow for the use of the QUIC protocol - and leveraging the advantages it offers compared to using the SCTP protocol - to be used for the NG-C (N2) interface, the non-user equipment-associated signaling is associated to a QUIC stream as shown in Figure 4.
The proposed QUIC association allows for an efficient multiplexing-demultiplexing of signaling messages at the QUIC layer instead of that being done at the application layer:
-- The QUIC connection with connection ID "X" that needs to be established when the gNB (or base station entity 111/access network node or entity) association is initiated is associated to carrying signaling between the gNB (or base station entity 111/access network node or entity) and the AMF (or core network node or entity 121) it is communicating with; cf. the first and second processing steps 401, 402.
-- In order to send non-user equipment-associated signaling, a QUIC stream with stream ID = "Y" is created, the characteristics of which are associated to the type of signaling that is being sent. It is considered, according to the present invention, that signaling carrying class 1 NGAP procedures are associated with a bidirectional QUIC stream, while signaling carrying class 2 NGAP procedures are associated with a unidirectional QUIC stream; cf. the third and fourth processing steps 403, 404. Additionally, it is considered that procedures associated with a unidirectional stream, if deemed not critical, can alternatively be transported via unreliable datagrams (DATAGRAM QUIC)
-- The NG setup request is then sent via connection X and stream Y, which allows the receiver to automatically associate that signaling message to non-UE-associated signaling of the gNB; cf. the fifth and sixth processing steps 405, 406.
-- For the NG setup response message, the same is applied in reverse; cf. the seventh and eighth processing steps 407, 408.

Figure 5 exemplarily represents a communication diagram between the user equipment 20, the access network node or entity (or base station entity) 111 and the core network (or a network function or service thereof) AMF; especially, Figure 5 is an example of a user equipment-associated signaling communication.
In a first processing step 501, a NAS initial registration request message is transmitted, by the user equipment 20 to the access network node or entity (or base station entity) 111.
In a second processing step 502, a QUIC stream Z (especially as part of QUIC connection X, cf. Figure 4) is opened, the QUIC stream Z having the associated (appropriate) characteristics.
In a third processing step 503, the QUIC stream Z is associated (exemplarily) to user equipment-associated signaling communication between the access network node or entity (or base station entity) 111 and the core network (or a network function or service thereof) AMF (referring to user equipment 20).
In a fourth processing step 504, a NAS initial registration request (message) is transmitted - between the access network node or entity (or base station entity) 111 and the core network (or a network function or service thereof) AMF - over QUIC, indicating (or referring to) QUIC connection X and QUIC stream Z.
In a fifth processing step 505, a QUIC message is transmitted - between the access network node or entity (or base station entity) 111 and the core network (or a network function or service thereof) AMF - the QUIC message being associated to user equipment-associated signaling (referring to user equipment 20).
Thus, Figure 5 is related to user equipment-associated signaling, for which the triggering point is typically a user equipment registration, which is received by the core network as a NAS initial registration request (as in the first processing step 501). This NAS initial registration request message typically requires that an RRC connection is established between the user equipment 20 and the gNB (or base station entity/access network node or entity 111), typically by means of - prior to the first processing step 501 shown in Figure 5 - using a RRCSetupRequest (message) (transmitted by the user equipment 20 and received by the gNB 111) and a RRCSetup (message) (transmitted by the gNB 111 and received by the user equipment 20); however, these messages (RRCSetupRequest and RRCSetup) are not represented in Figure 5.
The NAS message (corresponding to the NAS initial registration request as of the first processing step 501 in Figure 5) is transmitted between the user equipment 20 and the gNB/base station entity/access network node or entity 111 over a RRCSetupComplete message as a DedicatedNAS payload, and the NAS payload is then transported over a NGAP Initial UE Message Class 2 Procedure (which is not shown in Figure 5).
In order to allow for the use of the QUIC protocol, according to the present invention, and the advantages it offers compared to SCTP, to be used for the NG-C (N2) interface, the user equipment-associated signaling is associated to a QUIC stream as shown in Figure 5.
The proposed QUIC association allows for an efficient multiplexing-demultiplexing of signaling messages at the QUIC layer instead of that being done at the application layer:
-- The NAS initial registration request is received by the gNB/base station entity/access network node or entity 111; cf. the first processing step 501.
-- The NAS initial registration request triggers the opening of a QUIC stream with stream ID = "Z" over an existing QUIC connection (if an adequate connection does not exist, a new one is created); cf. the second and third processing steps 502, 503.
-- The NGAP initial user equipment message is then sent via connection "X" and stream "Z", which allows the receiver to automatically associate that signaling message to a specific user equipment-associated signaling of the gNB/base station entity/access network node or entity 111; cf. the fourth and fifth processing steps 504, 505.
Another stream (e.g. stream ID "Z+1") can be assigned to a further user equipment, such achieving effective multiplexing-demultiplexing of user equipment-associated signaling for multiple user equipments.

According to the present invention, it is advantageously possible that the specific QUIC protocol control information comprises identifier information of or associated to
-- the access network node or entity 111 (or gNB/base station entity) and/or
-- the core network node or entity 121 (or core network node or entity/access and mobility management function AMF) and/or
-- the user equipment 20 and/or
-- a further access network node or entity 112 (i.e. another gNB/base station entity) involved in the specific application layer message or the specific flow of application layer messages.
Thus, according to the present invention, it is advantageously possible to include 3GPP identifiers into QUIC identifiers and/or to associate 3GPP identifiers to QUIC identifiers, which provides the benefit of more effectively associate the connection ID and/or stream ID to instance/node identifiers (e.g. AMF ID, GUAMI, Global cell ID), as well as to a specific network. Thus, it is considered, according to the present invention, that the connection ID and stream ID is to be generated such that it includes or its generation includes (e.g. by means of applying cryptographic combination) information such as
-- instance / node identifiers, such as GUAMI, AMF identifier, gNB identifier, global cell ID,
-- Network identifiers, such as PLMN ID,
-- Association identifiers, such as RAN UE NGAP ID, AMF UE NGAP ID.
By incorporating and/or associating such identifier information in a discernible way (e.g. allocating some part of the connection/stream ID to the identifier or by cryptographic combination), application-aware load balancing at the QUIC layer is advantageously possible.
It is further advantageously possible to associate 3GPP identifiers into QUIC identifiers, such that the identifiers are not included within the QUIC identifiers but rather that one can be inferred by means of the other, especially by deriving one from the other or by configuring an association between the two.

In Figure 6, an N2 QUIC connection is schematically shown between a base station entity (or access network node or entity) 111 and a core network node or entity (especially an instance of an access and mobility management function) 121/AMF illustrating multipath functionality using the QUIC protocol. The core network node or entity (especially an instance of an access and mobility management function) 121/AMF comprises a first endpoint (indicated, in Figure 6, by means of reference sign EP 1) and a second endpoint (indicated, in Figure 6, by means of reference sign EP 1). The N2 QUIC connection comprising a first 'leg' of the connection (indicated, in Figure 6, by means of reference sign QUIC-N2-MP directed to the first endpoint EP 1), and a second 'leg' of the connection (indicated, in Figure 6, by means of reference sign QUIC-N2-MP directed to the second endpoint EP 2). The base station entity (or access network node or entity) 111 is shown to comprise a scheduling entity or functionality (especially a control plane scheduler) 111' that is configured such that it provides for an association between at QUIC stream and a path (i.e. either towards the first endpoint EP 1 or towards the second endpoint EP 2 (or towards both endpoints EP 1, EP 2).
Hence, according to the present invention, multi-path QUIC is advantageously able to be used, i.e. the application layer messages or the flow thereof is/are transmitted and/or received by using a multipath functionality of the QUIC protocol, wherein especially the stream association comprises stream affinity information:
According to the present invention, it is proposed to include the association of multiple QUIC connections to a given interface, such that multipath QUIC (MP-QUIC) can be applied to the signaling traffic.
In this case, the stream association is further considered to contain stream affinity information, such that the signaling associated with a given stream is either preferentially or exclusively using a given path. It is further considered that the stream association is further considered to contain stream affinity information, such that the signaling associated with a given stream is either preferentially or exclusively using both given paths simultaneously, especially by means of packet duplication.
It is thus advantageously to provide reliability and flexibility that is beyond what SCTP offers.

In Figure 7, an N2 QUIC connection (indicated, in Figure 7, by means of reference sign QUIC N2) is schematically shown illustrating the association of signaling traffic to multiple streams with different types. The N2 QUIC connection is typically realized between a base station entity (or access network node or entity) 111 and a core network node or entity (especially an instance of an access and mobility management function) 121/AMF as shown in Figures 2 and 3; however, for the sake of simplicity, these entities are not represented in Figure 7.
Thus, according to the present invention, it is advantageously possible to associate a stream type to control plane signaling:
As mentioned for the NG setup procedure, different stream types can be associated with different types of signaling for a given non-user equipment-associated (or user equipment-associated) signaling; this allows for extra flexibility by using a QUIC stream that reflects the application level requirements of the procedures being used.
In the exemplary embodiment shown in Figure 7, a QUIC stream "A" (cf. reference sign A in Figure 7) corresponds to a bidirectional stream for non-user equipment-associated signaling for gNB/base station entity/access network node or entity 111, a QUIC stream "B1" (cf. reference sign B1 in Figure 7) corresponds to a bidirectional stream for generic control plane signaling for a specific user equipment (e.g. user equipment "B"), and a QUIC stream "B2" (cf. reference sign B2 in Figure 7) corresponds to a unidirectional stream for paging-related signaling for the same specific user equipment (e.g. user equipment "B").
Thus, regarding the same (specific) user equipment 20 (e.g. user equipment "B"; not specifically represented in Figure 7), multiple user equipment-associated streams are possible to be realized as part of one QUIC connection.

In Figure 8, the communication between the user equipment 20, the access network node or entity (or base station entity) 111 and two core network nodes or entities (especially instances of an access and mobility management function) are schematically and exemplarily shown illustrating QUIC-level load balancing; the core network nodes or entities shown in Figure 8 are example of QUIC endpoints. A first core network node or entity (especially an instance of an access and mobility management function) is represented, in Figure 8, by means of reference sign AMF 1 (representing a first QUIC endpoint), and a second core network node or entity (especially an instance of an access and mobility management function) is represented, in Figure 8, by means of reference sign AMF 2 (representing a second QUIC endpoint). The QUIC-level load balancing is schematically and exemplarily illustrated by means of the following processing steps, showing that QUIC endpoints (such as AMF 1 and AMF 2) might impose limits on how many streams a peer may open. Advantageously according to the present invention, this provides an efficient way to load-balance signaling by leveraging QUIC's built-in connection limit feature:
In a first processing step 801, the NAS initial registration request is (transmitted by the user equipment 20 and) received by the gNB or access network node or entity 111.
In a second processing step 802, the NAS initial registration request triggers the opening of a QUIC stream towards the first QUIC endpoint AMF 1 with stream ID = Z1; however, the stream is rejected (in the third processing step 803) by the peer (i.e. the first QUIC endpoint AMF 1) due to the peer's stream limit.
In a fourth processing step 804, the gNB or access network node or entity 111 selects another QUIC endpoint (AMF 2) - e.g. a further instance of an access and mobility management function -, and triggers the opening of a QUIC stream towards AMF 2 with stream ID = Z2. In a fifth processing step 805, the stream is accepted by the second endpoint AMF 2, and in a sixth processing step 806, the QUIC stream is associated to the respective user equipment-associated signaling between the gNB (or access network node or entity) 111 and the second endpoint AMF 2 (i.e. typically an instance of an access and mobility management function).
In a seventh processing step 807, the NAS message is sent towards AMF 2, and, in an eighth processing step 808, the QUIC message is associated to the user equipment-associated signaling between the gNB 111 and the second endpoint AMF 2.

In Figure 9, QUIC endpoint signaling for application layer message communication, especially control plane communication, is schematically and exemplarily illustrated.
In order to efficiently allow endpoints to use unidirectional streams, it is proposed, according to the present invention, that endpoints for specific purposes can be signaled over other messages. A specific case where this can be advantageous is for HTTP-based signaling (e.g. using the SBA framework), which uses a request-response pattern. In this case, using a request-response pattern for NGAP Class 2 procedures may be wasteful, as no response is required. Figure 9 shows a first processing step 901 where the gNB or base station entity (or access network node or entity) 111 transmits QUIC endpoint information to the core network node or entity, e.g. an access and mobility management function, AMF, and receives, in a second processing step 902, a message towards that QUIC endpoint, thus advantageously allowing QUIC endpoint addressing from application layer messages, especially control plane messages.
Especially for this case, it is proposed according to the present invention, that an HTTP message between two endpoints includes QUIC endpoint information (it could actually refer to that same QUIC connection or hosts) indicating what QUIC endpoint and what stream characteristics (e.g. unidirectional stream, unreliable transport) should be used for a given use.
An example would be that a specific unidirectional-stream-capable endpoint is indicated to a core network node or entity AMF by the gNB/base station entity 111 for the gNB/base station entity 111 to receive paging messages.
Additionally, it is also possible and preferred according to the present invention, that it is indicated that for specific messages (e.g. non-critical telemetry data), datagram unreliable transport can be used.

## Claims

1. Method for transmitting application layer messages,
wherein the mobile communication network (100) comprises at least one access network node or entity (111) of an access network (110) and at least one core network node or entity (121) of a core network (120),
-- wherein the access network node or entity (111) and the core network node or entity (121) exchange the application layer messages in uplink and downlink direction over an underlying protocol being a QUIC protocol, and/or
-- wherein the access network node or entity (111) and a further access network node or entity (112) exchange application layer messages in uplink and downlink direction over an underlying protocol being a QUIC protocol, and/or
-- wherein the user equipment (20) and the core network node or entity (121) exchange - especially involving the access network node or entity (111) - application layer messages in uplink and downlink direction over an underlying protocol being a QUIC protocol,
wherein the method comprises the following steps:
-- in a first step, regarding a specific application layer message or a specific flow of application layer messages a mapping or an association is performed to a specific QUIC protocol control information,
-- in a second step, the specific application layer message or the specific flow of application layer messages is/are processed or routed based on the mapped or associated specific QUIC protocol control information.

2. Method according to claim 1, wherein the specific application layer message or the specific flow of application layer messages correspond(s) to:
-- messages exchanged between the user equipment (20) and the core network node or entity (121),
-- messages exchanged between the access network node or entity (111) and the core network node or entity (121), or
-- messages exchanged between the access network node or entity (111) and a further access network node or entity (112),
especially corresponding to user equipment-associated signaling and/or non-user equipment-associated signaling,
especially to next generation application layer protocol message(s), NGAP message(s), E1AP message(s), F1AP message(s), XnAP message(s) and/or to non-access stratum message(s), NAS message(s).

3. Method according to one of the preceding claims, wherein the specific QUIC protocol control information comprises identifier information of
-- the access network node or entity (111) and/or
-- the core network node or entity (121) and/or
-- the user equipment (20) and/or
-- the further access network node or entity (112)
involved in the specific application layer message or the specific flow of application layer messages.

4. Method according to one of the preceding claims, wherein - regarding an interface logical channel, especially an N2, Xn, E1, F1 interface logical channel - a QUIC connection between the access network node or entity (111) and the core network node or entity (121) or between the access network node or entity (111) and the further the access network node or entity (112) comprises a multitude of application layer message flows , especially comprising at least one non-user equipment-associated application layer message flows and/or at least one user equipment-associated application layer message flows,
wherein especially a specific QUIC connection comprises
-- a first QUIC stream comprising non-user equipment-associated application layer message(s) and a second QUIC stream comprising user equipment-associated application layer message(s), and/or
-- a third QUIC stream comprising user equipment-associated application layer message(s) regarding a different user equipment.

5. Method according to one of the preceding claims, wherein - regarding an interface logical channel, especially an N1, N2, Xn, E1, or F1 interface logical channel - a QUIC connection between the access network node or entity (111) and the core network node or entity (121), or between the access network node or entity (111) and the further the access network node or entity (112), or between the user equipment (20) and the core network node or entity (121), comprises a plurality of different application layer message flows having the same endpoints but different types of signaling,
especially a plurality of different application layer message flows being user equipment-associated application layer message flows, especially related to an N1, N2, Xn, E1, or F1 interface, that are related to the same user equipment but having different types of signaling, especially related to being either bidirectional or unidirectional,
and/or
especially a plurality of different application layer message flows being non-user equipment-associated application layer message flows, especially related to an N2, Xn, E1, or F1 interface, , that are related to the same endpoints but having different types of signaling, especially related to being either bidirectional or unidirectional,
and/or
especially a plurality of different application layer message flows being user equipment-associated application layer message flows, especially related to an N1, N2, Xn, E1, or F1 interface, ,that are related to the same user equipment but having different types of signaling, especially related to using reliable, especially based on a QUIC stream, or unreliable, especially based on DATAGRAM QUIC frames, transport,
and/or
especially a plurality of different application layer message flows being non-user equipment-associated application layer message flows, especially related to an N2, Xn, E1, or F1 interface, that are related to the same endpoints but having different types of signaling, especially related to using reliable, especially based on a QUIC stream, or unreliable, especially based on DATAGRAM QUIC frames, transport.

6. Method according to one of the preceding claims, wherein - in order to perform a NG setup procedure involving an NG setup request and an NG setup response between the access network node or entity (111) and the core network node or entity (121) -,
-- a QUIC connection, relating to a first QUIC protocol control information, especially as a QUIC connection identifier information (X), is opened and associated, or mapped, to one or a plurality of specific application layer messages or a specific flow thereof, and
-- a QUIC stream, relating to a second QUIC protocol control information, especially as a QUIC stream identifier information (Y), is opened and associated, or mapped, to one or a plurality of specific application layer messages or a specific flow thereof,
wherein the NG setup request and the NG setup response are processed or routed based on the first and second QUIC protocol control information (X, Y).

7. Method according to one of the preceding claims, wherein - in order to perform a user equipment registration procedure involving an NAS initial registration request between the user equipment (20) and the core network node or entity (121) -, a QUIC stream, relating to a third QUIC protocol control information, especially as a QUIC connection identifier information (Z), is opened and associated, or mapped, to one or a plurality of specific application layer messages or a specific flow thereof,
wherein the NAS initial registration request is processed or routed based on the third QUIC protocol control information (Z) or based on the first and third QUIC protocol control information (X, Z).

8. Method according to one of the preceding claims, wherein the specific QUIC protocol control information is used for load balancing purposes - especially at the at least one core network node or entity (121), especially an access and mobility management function - by a load balancing entity or functionality,
wherein, regarding processing the specific application layer message or the specific flow of application layer messages, the load balancing entity or functionality selects, based on the specific QUIC protocol control information, one of a plurality of worker instances, especially of the at least one core network node or entity (121).

9. Method according to one of the preceding claims, wherein stream-limit rejection is used for load balancing purposes among a plurality of instances of a type of network node or entity - especially among a plurality of instances of the core network node or entity (121), especially an access and mobility management function -,
wherein, regarding processing of the specific application layer message or the specific flow of application layer messages, a first instance of the type of network node or entity rejects to process the specific application layer message or the specific flow of application layer messages due to its stream-limit, and, subsequently, a second instance of the type of network node or entity accepts to process the specific application layer message or the specific flow of application layer messages.

10. Method according to one of the preceding claims, wherein the application layer messages or the flow thereof is/are transmitted and/or received by using a multipath functionality of the QUIC protocol, wherein especially the stream association comprises stream affinity information.

11. Method according to one of the preceding claims, wherein the specific QUIC protocol control information, especially the connection identifier information and/or the stream identifier information, comprises or is associated with the identifier information of at least one of the access network node or entity (111), the core network node or entity (121) and the user equipment (20),
especially by means of using at least one of the following:
-- an access and mobility management function identifier information,
-- a GUAMI identifier information,
-- a global cell identifier information,
-- a gNB identifier information,
-- a network identifier information, especially the PLMN identifier information,
-- a radio access network user equipment next generation application layer protocol identifier information, RAN UE NGAP identifier information,
-- an access and mobility management function user equipment next generation application layer protocol identifier information, AMF UE NGAP identifier information,
-- an access network node or entity identifier information,
-- a core network node or entity identifier information,
-- a user equipment identifier information,
wherein especially the specific QUIC protocol control information comprises the identifier information by means of a cryptographic combination of a plurality of the identifier information of at least one of the access network node or entity (111), the core network node or entity (121) and the user equipment (20).

12. System or mobile communication network (100) transmitting application layer messages,
wherein the mobile communication network (100) comprises at least one access network node or entity (111) of an access network (110) and at least one core network node or entity (121) of a core network (120),
-- wherein the access network node or entity (111) and the core network node or entity (121) exchange the application layer messages in uplink and downlink direction over an underlying protocol being a QUIC protocol, and/or
-- wherein the access network node or entity (111) and a further access network node or entity (112) exchange application layer messages in uplink and downlink direction over an underlying protocol being a QUIC protocol, and/or
-- wherein the user equipment (20) and the core network node or entity (121) exchange - especially involving the access network node or entity (111) - application layer messages in uplink and downlink direction over an underlying protocol being a QUIC protocol,
wherein the system of mobile communication network (100) is configured such that:
-- regarding a specific application layer message or a specific flow of application layer messages a mapping or an association is performed to a specific QUIC protocol control information,
-- the specific application layer message or the specific flow of application layer messages is/are processed or routed based on the mapped or associated specific QUIC protocol control information.

13. User equipment (20) for using the user equipment (20) with the mobile communication network (100) and/or for transmitting application layer messages, wherein the user equipment (20) and a core network node or entity (121) of the mobile communication network (100) exchange - especially involving an access network node or entity (111) of the mobile communication network (100) - application layer messages in uplink and downlink direction over an underlying protocol being a QUIC protocol,
wherein the user equipment (20) is configured such that:
-- regarding a specific application layer message or a specific flow of application layer messages a mapping or an association is performed to a specific QUIC protocol control information,
-- the specific application layer message or the specific flow of application layer messages is/are processed or routed based on the mapped or associated specific QUIC protocol control information.

14. Program comprising a computer readable program code, which, when executed on a computer and/or on a core network node or entity (121) and/or on an access network node or entity (111), especially a base station entity (111), or in part on a core network node or entity (121) and/or in part on an access network node or entity (111), especially a base station entity (111), causes the computer and/or the core network node or entity (121) and/or the access network node or entity (111), especially the base station entity (111), to perform a method according to one of claims 1 to 11.

15. Computer-readable medium comprising instructions which when executed on a computer and/or on a core network node or entity (121) and/or on an access network node or entity (111), especially a base station entity (111), or in part on a core network node or entity (121) and/or in part on an access network node or entity (111), especially a base station entity (111), causes the computer and/or the core network node or entity (121) and/or the access network node or entity (111), especially the base station entity (111), to perform a method according to one of claims 1 to 11.

## Amended claims

### Amended claims in accordance with Rule 137(2) EPC.

1. Method for transmitting application layer messages in an interface logical channel for control plane signaling,
wherein the mobile communication network (100) comprises an access network node or entity (111) of an access network (110) and at least one core network node or entity (121) of a core network (120),
-- wherein the access network node or entity (111) and the core network node or entity (121) exchange the application layer messages in uplink and downlink direction over an underlying protocol being a QUIC protocol, and/or
**--** wherein the access network node or entity (111) and a further access network node or entity (112) exchange application layer messages in uplink and downlink direction over an underlying protocol being a QUIC protocol, and/or
**--** wherein the user equipment (20) and the core network node or entity (121) exchange application layer messages in uplink and downlink direction over an underlying protocol being a QUIC protocol,
wherein the method comprises the following steps:
-- in a first step, regarding a specific application layer message or a specific flow of application layer messages a mapping or an association is performed to a specific QUIC protocol control information,
-- in a second step, the specific application layer message or the specific flow of application layer messages is/are processed or routed based on the mapped or associated specific QUIC protocol control information.

2. Method according to claim 1, wherein the specific application layer message or the specific flow of application layer messages correspond(s) to:
-- messages exchanged between the user equipment (20) and the core network node or entity (121),
-- messages exchanged between the access network node or entity (111) and the core network node or entity (121), or
-- messages exchanged between the access network node or entity (111) and the further access network node or entity (112),
especially corresponding to user equipment-associated signaling and/or non-user equipment-associated signaling,
especially to next generation application layer protocol message(s), NGAP message(s), E1AP message(s), F1AP message(s), XnAP message(s) and/or to non-access stratum message(s), NAS message(s).

3. Method according to one of the preceding claims, wherein the specific QUIC protocol control information comprises identifier information of
-- the access network node or entity (111) and/or
-- the core network node or entity (121) and/or
-- the user equipment (20) and/or
-- the further access network node or entity (112)
involved in the specific application layer message or the specific flow of application layer messages.

4. Method according to one of the preceding claims, wherein - regarding an interface logical channel, especially an N2, Xn, E1, F1 interface logical channel - a QUIC connection between the access network node or entity (111) and the core network node or entity (121) or between the access network node or entity (111) and the further the access network node or entity (112) comprises a multitude of application layer message flows , especially comprising at least one non-user equipment-associated application layer message flows and/or at least one user equipment-associated application layer message flows,
wherein especially a specific QUIC connection comprises
-- a first QUIC stream comprising non-user equipment-associated application layer message(s) and a second QUIC stream comprising user equipment-associated application layer message(s), and/or
-- a third QUIC stream comprising user equipment-associated application layer message(s) regarding a different user equipment.

5. Method according to one of the preceding claims, wherein - regarding an interface logical channel, especially an N1, N2, Xn, E1, or F1 interface logical channel - a QUIC connection between the access network node or entity (111) and the core network node or entity (121), or between the access network node or entity (111) and the further the access network node or entity (112), or between the user equipment (20) and the core network node or entity (121), comprises a plurality of different application layer message flows having the same endpoints but different types of signaling,
especially a plurality of different application layer message flows being user equipment-associated application layer message flows, especially related to an N1, N2, Xn, E1, or F1 interface, that are related to the same user equipment but having different types of signaling, especially related to being either bidirectional or unidirectional,
and/or
especially a plurality of different application layer message flows being non-user equipment-associated application layer message flows, especially related to an N2, Xn, E1, or F1 interface, , that are related to the same endpoints but having different types of signaling, especially related to being either bidirectional or unidirectional,
and/or
especially a plurality of different application layer message flows being user equipment-associated application layer message flows, especially related to an N1, N2, Xn, E1, or F1 interface, ,that are related to the same user equipment but having different types of signaling, especially related to using reliable, especially based on a QUIC stream, or unreliable, especially based on DATAGRAM QUIC frames, transport,
and/or
especially a plurality of different application layer message flows being non-user equipment-associated application layer message flows, especially related to an N2, Xn, E1, or F1 interface, that are related to the same endpoints but having different types of signaling, especially related to using reliable, especially based on a QUIC stream, or unreliable, especially based on DATAGRAM QUIC frames, transport.

6. Method according to one of the preceding claims, wherein - in order to perform a NG setup procedure involving an NG setup request and an NG setup response between the access network node or entity (111) and the core network node or entity (121) -,
-- a QUIC connection, relating to a first QUIC protocol control information, especially as a QUIC connection identifier information (X), is opened and associated, or mapped, to one or a plurality of specific application layer messages or a specific flow thereof, and
-- a QUIC stream, relating to a second QUIC protocol control information, especially as a QUIC stream identifier information (Y), is opened and associated, or mapped, to one or a plurality of specific application layer messages or a specific flow thereof,
wherein the NG setup request and the NG setup response are processed or
routed based on the first and second QUIC protocol control information (X, Y).

7. Method according to one of the preceding claims, wherein - in order to perform a user equipment registration procedure involving an NAS initial registration request between the user equipment (20) and the core network node or entity (121) -, a QUIC stream, relating to a third QUIC protocol control information, especially as a QUIC connection identifier information (Z), is opened and associated, or mapped, to one or a plurality of specific application layer messages or a specific flow thereof,
wherein the NAS initial registration request is processed or routed based on the third QUIC protocol control information (Z) or based on the first and third QUIC protocol control information (X, Z).

8. Method according to one of the preceding claims, wherein the specific QUIC protocol control information is used for load balancing purposes - especially at the at least one core network node or entity (121), especially an access and mobility management function - by a load balancing entity or functionality,
wherein, regarding processing the specific application layer message or the specific flow of application layer messages, the load balancing entity or functionality selects, based on the specific QUIC protocol control information, one of a plurality of worker instances, especially of the at least one core network node or entity (121).

9. Method according to one of the preceding claims, wherein stream-limit rejection is used for load balancing purposes among a plurality of instances of a type of network node or entity - especially among a plurality of instances of the core network node or entity (121), especially an access and mobility management function -,
wherein, regarding processing of the specific application layer message or the specific flow of application layer messages, a first instance of the type of network node or entity rejects to process the specific application layer message or the specific flow of application layer messages due to its stream-limit, and, subsequently, a second instance of the type of network node or entity accepts to process the specific application layer message or the specific flow of application layer messages.

10. Method according to one of the preceding claims, wherein the application layer messages or the flow thereof is/are transmitted and/or received by using a multipath functionality of the QUIC protocol, wherein especially the stream association comprises stream affinity information.

11. Method according to one of the preceding claims, wherein the specific QUIC protocol control information, especially the connection identifier information and/or the stream identifier information, comprises or is associated with the identifier information of at least one of the access network node or entity (111), the core network node or entity (121) and the user equipment (20),
especially by means of using at least one of the following:
-- an access and mobility management function identifier information,
-- a GUAMI identifier information,
-- a global cell identifier information,
-- a gNB identifier information,
-- a network identifier information, especially the PLMN identifier information,
-- a radio access network user equipment next generation application layer protocol identifier information, RAN UE NGAP identifier information,
-- an access and mobility management function user equipment next generation application layer protocol identifier information, AMF UE NGAP identifier information,
-- an access network node or entity identifier information,
-- a core network node or entity identifier information,
-- a user equipment identifier information,
wherein especially the specific QUIC protocol control information comprises the identifier information by means of a cryptographic combination of a plurality of the identifier information of at least one of the access network node or entity (111), the core network node or entity (121) and the user equipment (20).

12. System or mobile communication network (100) transmitting application layer messages in an interface logical channel for control plane signaling,
wherein the mobile communication network (100) comprises an access network node or entity (111) of an access network (110) and at least one core network node or entity (121) of a core network (120),
-- wherein the access network node or entity (111) and the core network node or entity (121) exchange the application layer messages in uplink and downlink direction over an underlying protocol being a QUIC protocol, and/or
-- wherein the access network node or entity (111) and a further access network node or entity (112) exchange application layer messages in uplink and downlink direction over an underlying protocol being a QUIC protocol, and/or
**--** wherein the user equipment (20) and the core network node or entity (121) exchange ) application layer messages in uplink and downlink direction over an underlying protocol being a QUIC protocol,
wherein the system of mobile communication network (100) is configured such that:
-- regarding a specific application layer message or a specific flow of application layer messages a mapping or an association is performed to a specific QUIC protocol control information,
-- the specific application layer message or the specific flow of application layer messages is/are processed or routed based on the mapped or associated specific QUIC protocol control information.

13. User equipment (20) for using the user equipment (20) with the mobile communication network (100) and/or for transmitting application layer messages in an interface logical channel for control plane signaling,
wherein the user equipment (20) and a core network node or entity (121) of the mobile communication network (100) exchange -involving an access network node or entity (111) of the mobile communication network (100) - application layer messages in uplink and downlink direction over an underlying protocol being a QUIC protocol,
wherein the user equipment (20) is configured such that:
-- regarding a specific application layer message or a specific flow of application layer messages a mapping or an association is performed to a specific QUIC protocol control information,
-- the specific application layer message or the specific flow of application layer messages is/are processed or routed based on the mapped or associated specific QUIC protocol control information.

14. Program comprising a computer readable program code, which, when executed on a computer and/or on a core network node or entity (121) and/or on an access network node or entity (111), or in part on a core network node or entity (121) and/or in part on an access network node or entity (111) causes the computer and/or the core network node or entity (121) and/or the access network node or entity (111) to perform a method according to one of claims 1 to 11.

15. Computer-readable medium comprising instructions which when executed on a computer and/or on a core network node or entity (121) and/or on an access network node or entity (111) or in part on a core network node or entity (121) and/or in part on an access network node or entity (111) causes the computer and/or the core network node or entity (121) and/or the access network node or entity (111) to perform a method according to one of claims 1 to 11.
